Europäisches Patentamt

European Patent Office

Office européen des brevets

(11) Veröffentlichungsnummer: **0 068 237**
**B1**

(12) **EUROPÄISCHE PATENTSCHRIFT**

(45) Veröffentlichungstag der Patentschrift:
11.09.85

(51) Int. Cl.⁴: **G 01 P 3/48**

(21) Anmeldenummer: 82105133.1

(22) Anmeldetag: 11.06.82

(54) Drehzahlerfassung bei elektrischen Maschinen.

(30) Priorität: 22.06.81 DE 3124455

(43) Veröffentlichungstag der Anmeldung:
05.01.83 Patentblatt 83/1

(45) Bekanntmachung des Hinweises auf die Patenterteilung:
11.09.85 Patentblatt 85/37

(84) Benannte Vertragsstaaten:
AT CH DE FR IT LI

(56) Entgegenhaltungen:
DE - A - 2 355 787
US - A - 3 764 888

IBM TECHNICAL DISCLOSURE BULLETIN, Band 7, Nr.
5, Oktober 1964, Seite 343, New York, USA, D.E. RUTTER
Sr.: "Sensing for torque motor speed"

(73) Patentinhaber: Siemens Aktiengesellschaft, Berlin und
München Wittelsbacherplatz 2, D-8000 München 2 (DE)

(72) Erfinder: Tröndle, Hans-Peter, Dr.,
Friedrich-Bauer-Strasse 3, D-8520 Erlangen (DE)
Erfinder: Rubruck, Manfred, An den Eichen 7,
D-8523 Baiersdorf (DE)

## Beschreibung

Die Erfindung betrifft eine Einrichtung zur Erzeugung eines dem Drehzahlistwert einer elektrischen Maschine entsprechenden Signals mit einem mit der Maschine gekoppelten Pulsgeber zur Erzeugung einer Impulsfolge mit einer der Drehzahl der Maschine proportionalen Impulsfolgefrequenz.

Mit diesem Oberbegriff wird auf eine Anordnung Bezug genommen, wie sie beispielsweise aus der US-A-3 764 888 bekannt ist. Hier werden die Pulse zur Korrektur eines aus einer Wechselstromtachometermaschine abgeleiteten Drehzahlistwertes benutzt.

Aus Kosten- und Wartungsgründen versucht man heute in zunehmendem Maße bei Antrieben völlig ohne Tachometermaschine zur Erfassung der Drehzahl für die Regelung auszukommen und nur den oft ohnehin — z. B. bei Wegregelungen für Werkzeugmaschinen — vorhandenen Pulsgeber zur Drehzahlerfassung heranzuziehen.

Eine bekannte Anordnung besteht darin, daß mit einem Frequenzspannungswandler die Pulsfrequenz des Gebers in eine entsprechende Spannung umgesetzt wird, die dann als Drehzahlistwert dient. Um auch niedrigere Drehzahlen erfassen zu können, muß man hierbei mit einer relativ hohen Glättung arbeiten, die jedoch dann voll in die Zeitkonstanten des Regelkreises eingeht und hierdurch die Regeldynamik beeinträchtigt.

Ein anderes bekanntes Verfahren (vgl. z. B. EP-A-0 027 204) besteht darin, die Zeit zwischen dem Auftreten der Pulse des Pulsgebers mit Hilfe eines Frequenzgenerators und eines durch die Pulse gesteuerten Zählers zu erfassen. Bei diesem Verfahren ist nachteilig, daß die Zeit zwischen dem Eintreffen zweier Impulse des Pulsgebers voll in die Summe der kleinen Zeitkonstanten der Regelungen eingeht, was vor allem bei sehr kleinen Drehzahlen sehr störend ist — umgekehrt bekommt man bei sehr großen Drehzahlen Probleme mit der Meßgenauigkeit. Ein weiterer Nachteil ist darin zu sehen, daß die Meßzeit zwischen den Pulsen dem Kehrwert der Drehzahl proportional ist und daß daher die Drehzahl aus der Zeit erst durch eine Division ermittelt werden muß.

Die Drehzahl Null ist damit nicht beherrschbar.

Die Aufgabe der vorliegenden Erfindung besteht darin, im Rahmen einer Antriebsregelung mit Hilfe des Pulsgebers ein weitgehend glattes drehzahlproportionales Signal zu gewinnen, durch das jedoch keine Zeitkonstanten in den Regelkreis eingebracht werden.

Diese Aufgabe wird erfindungsgemäß durch folgende Merkmale gelöst:

a) Mittel zur Erzeugung eines dem elektrischen Moment der Maschine proportionalen Signals,

b) eine Korrekturschaltung zur Überlagerung des dem elektrischen Moment proportionalen Signals mit einem dem auf die Maschine einwirkenden Lastmoment proportionalen Korrektursignal,

c) einen Integrator zur Erzeugung des Drehzahlistwerts durch Integration des Ausgangssignals der Korrekturschaltung mit einer der Zeitkonstanten der Maschine proportionalen Zeitkonstanten und

d) eine Vergleicherschaltung zur Ableitung des Korrektursignals durch Bildung der Differenz der Impulsfolgefrequenz und des Drehzahlistwerts und Integration des Differenzsignals.

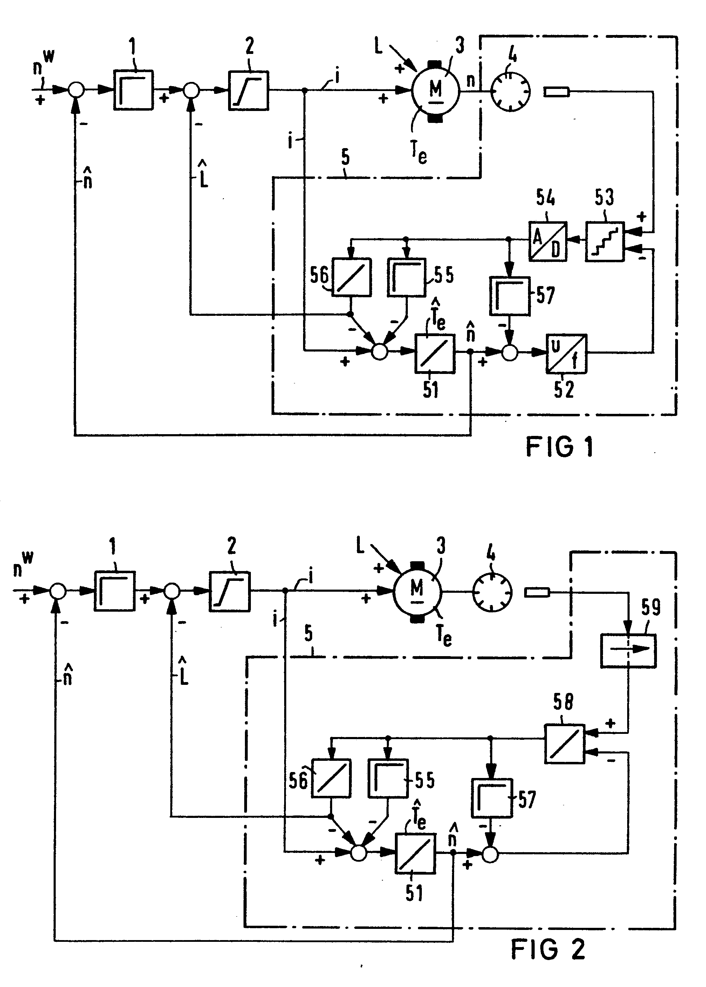

Auf diese Weise läßt sich aus dem dem Drehmoment proportionales Signal ein weitgehend glattes Signal für den Drehzahlistwert mittels eines Störbeobachters errechnen; der Pulsgeber dient nur dazu, den Beobachter zu korrigieren, z. B. bei Laststößen. Die statische Genauigkeit der Drehzahlerfassung ist bei einer digitalen Lösung (Fig. 1) nur durch die Drift der Umsetzung in die Sollfrequenz bestimmt und bei einer analogen Lösung (Fig. 2) durch die Genauigkeit der Erzeugung einer der Frequenz des Pulsgebers proportionalen Spannungszeitfläche und die Drift des dahinterliegenden Integrators gegeben.

Anhand einer Zeichnung sei die Erfindung näher erläutert; es zeigt

Fig. 1 einen tachometerlosen Drehzahlregelkreis bei einer Gleichstrommaschine mit Pulsgenerator und Lastbeobachter und

Fig. 2 eine vereinfachte analoge Lösung.

Bei der Anordnung nach Fig. 1 wird eine der gewünschten Solldrehzahl $n^w$ und eine der Istdrehzahl $\tilde{n}$ proportionale Spannung einem Drehzahlregler 1 zugeführt, der hieraus die Führungsgröße für einen Stromregelkreis 2 bildet, der seinerseits über den nichtgezeigten Stromrichter den erforderlichen Ankerstrom i der Gleichstrommaschine 3 bestimmt. Auf die Maschine 3 möge dabei das Lastmoment L einwirken. Mit der Maschine 3 ist ein elektronischer Pulsgeber 4 mechanisch gekoppelt, an dessen Ausgang eine Pulsfolge mit einer der Drehzahl n der Maschine 3 proportionalen Frequenz erscheint. Es gilt nun in diesem System, daß die zeitliche Änderung der Drehzahl der Maschine 3 der Differenz aus elektrischem Moment und Lastmoment proportional ist. Betrachtet man z. B. den Leerlauffall, so ist die Drehzahl n dem zeitlichen Integral des elektrischen Moments proportional; d. h. bei einer Gleichstrommaschine — bei konstantem magnetischem Fluß — dem Integral des Ankerstroms i. Integriert man daher den Ankerstrom i in einem Integrator 51 mit einer Zeitkonstante $\tilde{T}_\theta$, die der Zeitkonstante $T_\theta$ der Maschine 3 entspricht, so folgt der errechnete Drehzahlwert $\tilde{n}$ am Ausgang des Integrators 51 in gleicher Weise dem Strom i wie die Drehzahl n am Ausgang der Maschine 3. Dieses Signal $\tilde{n}$ ist ein glattes Signal und kann sehr gut zur Drehzahlregelung benutzt werden.

Wie vorher erwähnt, würde jedoch ein derartiges Signal den Einfluß von Laststörungen außer Betracht lassen. Es wird daher zusätzlich ein dem Lastmoment L proportionales Signal erzeugt und als Korrekturwert für das elektrische Moment benutzt. Hierzu wird in einem Differenzzähler 53 ein der Differenz zwischen Frequenz des Pulsgebers 4 und Sollfrequenz eines Spannungsfrequenzumsetzers 52 proportionales Signal erzeugt und über einen Digital-Analog-Umsetzer 54 und einem Integrator 56 als ein dem errechneten Lastmoment $\hat{L}$ proportionales Signal dem dem elektrischen Moment proportionalen Signal als Korrekturwert zugeführt und gemeinsam mit diesem integriert. Der errechnete Wert $\hat{n}$ am Ausgang des Integrators 51 berücksichtigt dann elektrisches Moment und Lastmoment. Die proportionalen Rückführungen 55 und 57 gewährleisten die Stabilität der Rechenschaltung.

Die Gesamtanordnung zur Drehzahlbildung ist mit 5 bezeichnet und strichpunktiert umrandet.

Die Proportionalverstärkungen 55 und 57 des Beobachters können in die Eingänge der Integrierer verlagert werden. Die durch Teilungsfehler des Pulsgebers bedingte subharmonische Welligkeit kann durch ein hinter dem Differenzzähler 53 eingebauten Filter unterdrückt werden. Wird der Beobachter hierdurch zu langsam (Lastverhalten), so kann man die Störwelligkeit durch einen mit dem Beobachter verknüpften nachgeführten Oszillator ausblenden.

Zusätzlich kann das dem errechneten Lastmoment $\hat{L}$ proportionale Signal auch in den Stromregelkreis 2 eingeführt werden. Bei einem starren Antrieb kann man dadurch den Drehzahlintegrator von der Lastkompensation völlig entlasten. Man gewinnt dabei einen Faktor 2 in der Regeldynamik. Der Drehzahlintegrator muß dann nur noch für die stationäre Genauigkeit sorgen. Bei einem elastischen Antrieb kann man das mechanische System durch Aufschalten des Wellenmomentes auf den Stromregelkreis wesentlich besser bedämpfen, d. h. schneller machen. Durch das Aufschalten des Wellenmomentes kann man auch künstlich die Drehfeder des mechanischen Systems so beeinflussen, daß die mechanische Eigenfrequenz in einen Frequenzbereich gerät, in dem sie vom Drehzahlregler gefaßt werden kann.

Fig. 2 zeigt eine etwas vereinfachte analoge Ausführung. Hier wird durch die Pulse des Pulsgebers 4 eine monostabile Kippstufe 59 angestoßen, die Spannungszeitfläche am Ausgang dieser Kippstufe wird mit dem errechneten Drehzahlistwert $\hat{n}$ in einem Integrator 58 verglichen und die Differenz ebenfalls für die Korrektur integriert.

**Patentansprüche**

1. Einrichtung zur Erzeugung eines dem Drehzahlistwert einer elektrischen Maschine entsprechenden Signals, mit einem mit der Maschine (3) gekoppelten Pulsgeber (4) zur Erzeugung einer Impulsfolge mit einer der Drehzahl der Maschine proportionalen Impulsfolgefrequenz, gekennzeichnet durch folgende Merkmale:

a) Mittel zur Erzeugung eines dem elektrischen Moment der Maschine proportionalen Signals (i),

b) eine Korrekturschaltung zur Überlagerung des dem elektrischen Moment proportionalen Signals (i) mit einem dem auf die Maschine einwirkenden Lastmoment (L) proportionalen Korrektursignal,

c) einen Integrator (51) zur Erzeugung des Drehzahlistwerts ($\hat{n}$) durch Integration des Ausgangssignals der Korrekturschaltung mit einer der Zeitkonstanten ($T_e$) der Maschine proportionalen Zeitkonstanten ($\hat{T}_e$) und

d) eine Vergleicherschaltung (53—56; 58, 59) zur Ableitung des Korrektursignals durch Bildung der Differenz der Impulsfolgefrequenz und des Drehzahlistwerts und Integration des Differenzsignals.

2. Einrichtung nach Anspruch 1, dadurch gekennzeichnet, daß die Vergleicherschaltung einen Differenzzähler (53) aufweist, dem einerseits die Impulsfolge und andererseits das Ausgangssignal eines dem Integrator (51) nachgeschalteten Spannungs-Frequenz-Wandlers (52) zugeführt ist, sowie einen an den Ausgang des Differenzzählers (53) angeschlossenen Analog-Digitalwandler (54) und einen an dessen Ausgang angeschlossenen Analogintegrator (56), der mit dem Eingang der Korrekturschaltung verbunden ist.

3. Einrichtung nach Anspruch 2, dadurch gekennzeichnet, daß die Korrekturschaltung mit dem Ausgang des Analog-Digital-Wandlers (54) auch über ein Proportionalglied (55) verbunden ist.

4. Einrichtung nach Anspruch 1, dadurch gekennzeichnet, daß die Vergleicherschaltung eine von der Impulsfolge beaufschlagte monostabile Kippstufe (59) sowie Mittel (58) zum Vergleich der Spannungs-Zeit-Flächen der Ausgangsimpulse der Kippstufe mit der vom Integrator (51) gelieferten Spannung aufweist.

**Claims**

1. A device for producing a signal which corresponds to the actual rate of rotation of an electrical machine, with a pulse generator (4) coupled to the machine (3) to produce a pulse sequence having a pulse repetition frequency proportional to the rate of rotation of the machine, characterized by the following features:

(a) means for the production of a signal (i) proportional to the electrical moment of the machine,

(b) a correcting circuit which serves to superimpose on the signal (i), proportional to the electrical moment, a correcting signal proportional to the load moment (L) which acts upon the machine,

(c) an integrator (51) which produces the rate of rotation actual value (ñ) by integrating the output signal of the correcting circuit with a time constant ($\hat{T}_e$) proportional to the time constant ($T_e$) of the machine, and

(d) a comparator circuit (53—56; 58, 59) which obtains the correcting signal by forming the difference between the pulse repetition frequency and the actual rate of rotation and integrating the difference signal.

2. A device as claimed in claim 1, characterized in that the comparator circuit has a difference counter (53) supplied with the pulse sequence and with the output signal of a voltage-frequency converter (52) connected following the integrator (51), and also has an analogue-to-digital converter (54) connected to the output of the difference counter (53), and an analogue integrator (56) connected to the output of said analogue-to-digital converter and to the input of the correcting circuit.

3. A device as claimed in claim 2, characterized in that the correcting circuit is connected to the output of the analogue-to-digital converter (54) via a proportional element (55).

4. A device as claimed in claim 1, characterized in that the comparator circuit has a monostable flip-flop (59) acted upon by the pulse sequence, and means (58) which compare the voltage-time areas of the output pulses of the flip-flop with the voltage supplied by the integrator (51).

**Revendications**

1. Dispositif pour produire un signal correspondant à la vitesse de rotation réelle d'une machine électrique, possédant un générateur d'impulsions (4) couplé à la machine (3) et destiné à produire un train d'impulsions ayant une fréquence d'impulsions proportionnelle à la vitesse de rotation de la machine, caractérisé en ce qu'il comprend:

a) des moyens pour produire un signal (i) proportionnel au moment électrique,

b) un circuit de correction pour superposer au signal (i) proportionnel au moment électrique un signal de correction proportionnel au couple résistant (L) agissant sur la machine,

c) un intégrateur (51) pour produire la vitesse de rotation réelle (ñ) par intégration du signal de sortie du circuit de correction avec une constante de temps ($\hat{T}_e$) proportionnelle à la constante de temps ($T_e$) de la machine et

d) un circuit de comparaison (53—56; 58, 59) pour établir le signal de correction par formation de la différence entre la fréquence d'impulsions et la vitesse de rotation réelle et intégration du signal de différence.

2. Dispositif selon la revendication 1, caractérisé en ce que le circuit de comparaison comporte un compteur différentiel (53), auquel sont appliqués d'une part le train d'impulsions et d'autre part le signal de sortie d'un convertisseur tension-fréquence (52) monté à la suite de l'intégrateur (51), de même qu'un convertisseur analogique-numérique (54) connecté à la sortie du compteur différentiel (53) et un intégrateur analogique (56) connecté à la sortie du compteur différentiel (53) et relié à l'entrée du circuit de correction.

3. Dispositif selon la revendication 2, caractérisé en ce que le circuit de correction est relié également à la sortie du convertisseur analogique-numérique (54) à travers un élément à action proportionnelle (55).

4. Dispositif selon la revendication 1, caractérisé en ce que le circuit de comparaison comporte une bascule monostable (59) à laquelle est appliqué le train d'impulsions et des moyens (58) pour comparer les surfaces tension-temps des impulsions de sortie de la bascule avec la tension fournie par l'intégrateur (51).

FIG 1

FIG 2